# FASCICULE DE BREVET EUROPEEN

(11) **EP 3 986 789 B1**
(45) Date de publication et mention de la délivrance du brevet: **06.05.2026**
(21) Numéro de dépôt: 20742347.6
(22) Date de dépôt: 16.06.2020
(51) Int. Cl.: B64D 13/08, B64D 13/02

(54) **ENSEMBLE D'ÉCHANGEURS COMPRENANT UNE LAME D'AIR ISOLANTE, SYSTÈME DE CONDITIONNEMENT D'AIR ASSOCIÉ**
WÄRMETAUSCHERANORDNUNG MIT EINEM ISOLIERENDEN LUFTSPALT UND ZUGEHÖRIGES KLIMATISIERUNGSSYSTEM
HEAT EXCHANGER ASSEMBLY COMPRISING AN INSULATING AIR GAP, ASSOCIATED AIR-CONDITIONING SYSTEM

(30) Priorité: 21.06.2019 FR 1906743
(43) Date de publication de la demande: 27.04.2022
(73) Titulaire: Liebherr-Aerospace Toulouse SAS, 31200 Toulouse (FR)
(72) Inventeur: ROBERT, Julien, 31016 TOULOUSE Cedex 2 (FR); MEUNIER, Stéphane, 31016 TOULOUSE Cedex 2 (FR)
(74) Mandataire: Bringer IP
(86) Numéro de dépôt international: PCT/FR2020/051033
(87) Numéro de publication internationale: WO 2020/254754

(56) Documents cités:
- DE-A1- 10 201 426
- DE-B4- 10 201 426
- GB-A- 2 015 723
- GB-A- 2 479 044
- US-A- 4 138 857
- US-A1- 2014 260 340

## Description

### Domaine technique de l'invention

L'invention concerne un ensemble d'échangeurs de chaleur. En particulier, l'invention concerne un ensemble d'échangeurs de chaleur pouvant être utilisé dans un système de conditionnement d'air pour un aéronef.

### Arrière-plan technologique

Les systèmes de conditionnement d'air ou autres systèmes basés sur une pluralité d'échanges thermiques entre différents fluides comprennent une pluralité d'échangeurs de chaleur permettant ces échanges thermiques.

En particulier, dans un système de conditionnement d'air pour un aéronef, plusieurs échangeurs de chaleur peuvent être utilisés pour refroidir des fluides tels que de l'huile, de l'air, etc. par un air dynamique, souvent appelé « RAM air », généralement de l'air ambiant récupéré à l'extérieur de l'aéronef et mis en mouvement par un ventilateur. Le ventilateur est par exemple entrainé par un moteur ou par l'arbre d'une turbomachine, en particulier par l'arbre d'une turbomachine du système de conditionnement d'air.

Cette source d'air dynamique permet un refroidissement efficace des fluides à refroidir.

Dans les architectures actuelles des systèmes de conditionnement d'air, on rencontre soit des échangeurs indépendants, soit des échangeurs regroupés par ensemble d'échangeurs.

Les ensembles d'échangeur permettent une réduction d'encombrement et une maintenance simplifiée, les échangeurs étant tous agencés dans une localisation proche.

Toutefois, ce rapprochement d'échangeurs entraîne des désavantages, notamment thermiques : la présence rapprochée des échangeurs peut entraîner la formation de ponts thermiques c'est-à-dire la transmission de chaleur d'un échangeur à l'autre.

Ces ponts thermiques sont à éviter absolument car ils peuvent entraîner des disfonctionnements dans les échanges thermiques, notamment si un échangeur de chaleur traite un fluide de température bien plus élevé que l'autre échangeur de chaleur.

Le document GB 2 015 723 A décrit un système de conditionnement d'air pour un aéronef.

### Objectifs de l'invention

L'invention vise à fournir un système de conditionnement d'air d'un aéronef.

L'invention vise également à fournir un système de conditionnement d'air d'un aéronef dans lequel les échangeurs de chaleur ont une localisation proche ou environnement proche.

L'invention vise en particulier à fournir un système de conditionnement d'air d'un aéronef évitant les ponts thermiques entre les échangeurs de chaleur.

### Exposé de l'invention

Pour ce faire, l'invention propose un système de conditionnement d'air pour un aéronef selon la revendication 1.

Un système de conditionnement d'air selon l'invention permet ainsi de regrouper au moins deux échangeurs de chaleur ensemble en utilisant l'air dynamique comme une passe froide commune aux échangeurs de chaleur, tout en évitant les ponts thermiques entre les échangeurs de chaleur.

En particulier, la disposition des échangeurs dans la direction longitudinale, qui est la direction de circulation de l'air dynamique dans le canal permet l'alimentation des échangeurs de chaleur par une passe froide composée par l'air dynamique.

Le passage d'air permet une isolation thermique entre les différents échangeurs. La circulation d'air dynamique se faisant selon la direction longitudinale, l'air circulant dans ce passage d'air isolant n'entre pas en contact avec les échangeurs mais forme uniquement la lame d'air isolante dans l'espace formé par l'écartement avec les échangeurs. Ainsi, aucune chaleur n'est transmise d'un échangeur à l'autre et en particulier, aucun air dynamique qui aurait été réchauffé par le passage dans un échangeur de chaleur ne circule ensuite dans un autre échangeur de chaleur.

L'air dynamique assure ainsi une double fonction, de refroidissement par la passe froide dans chaque échangeur, et d'isolation entre les échangeurs de chaleur.

Avantageusement et selon l'invention, au moins deux échangeurs de chaleur parmi les échangeurs de l'ensemble sont fabriqués dans une même matrice.

Selon cette variante, la fabrication de l'ensemble d'échangeurs dans une même matrice permet une simplification du processus de fabrication et une réduction des coûts.

En outre, il permet de créer le passage d'air directement lors de la fabrication des échangeurs. Ainsi, le passage d'air est préformé entre les échangeurs de chaleur lors de la fabrication, et cela évite que celui-ci doive être formé lors de l'installation des échangeurs de l'ensemble, par exemple dans un système de conditionnement d'air d'un aéronef.

Le fluide formant la passe chaude de chaque échangeur est de l'air.

Les échangeurs de chaleur sont ainsi de type air/air et sont particulièrement adaptés pour le refroidissement et le conditionnement d'air dans un système de conditionnement d'air pour un aéronef.

Avantageusement et selon l'invention la distance entre les deux échangeurs, selon la direction transversale, est comprise entre 1 mm et 10 mm, de préférence entre 3 mm et 6 mm.

Ces distances permettent à la fois de garantir un espacement minimal entre les échangeurs de chaleur pour permettre l'isolation thermique entre les deux échangeurs de chaleur, et à la fois d'avoir un espace suffisamment faible pour un encombrement limité de l'ensemble des échangeurs dans le canal de circulation d'air dynamique.

L'invention concerne également un système de conditionnement d'air caractérisé en ce qu'il comprend un ensemble d'échangeurs de chaleur selon l'invention.

Un système de conditionnement d'air selon l'invention permet de réunir deux échangeurs dans une localisation proche sans toutefois entraîner de ponts thermiques qui seraient dommageables à leur efficacité.

Selon l'invention, un premier échangeur de l'ensemble forme un échangeur primaire du système de conditionnement d'air, refroidissant de l'air prélevé et transmettant l'air ainsi refroidi vers une entrée d'un compresseur du système de conditionnement d'air, et un deuxième échangeur de l'ensemble forme un échangeur principal du système de conditionnement d'air, refroidissant l'air sortant dudit compresseur.

Selon l'invention, l'échangeur de chaleur primaire et l'échangeur de chaleur principal peuvent fonctionner sans pont thermique. En particulier, la chaleur dégagée lors du passage par un des échangeurs n'est jamais transmise à l'autre échangeur par l'air dynamique, le fonctionnement des deux échangeurs étant indépendants.

Avantageusement et selon l'invention, le système de conditionnement d'air comprend une turbomachine comprenant un arbre de transmission, ledit arbre de transmission étant entrainé en rotation par la turbomachine et entraînant un ventilateur configuré pour fournir l'air dynamique traversant le canal de circulation d'air dynamique. L'air dynamique est ainsi formé du « *RAM air* » (en anglais), qui est mis en mouvement par le ventilateur de la turbomachine.

L'invention concerne également un aéronef comprenant un système de conditionnement d'air selon l'invention.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un ensemble d'échangeur de chaleur selon un mode de réalisation de l'invention.
[Fig. 2] est une vue schématique simplifiée d'un système de conditionnement d'air selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

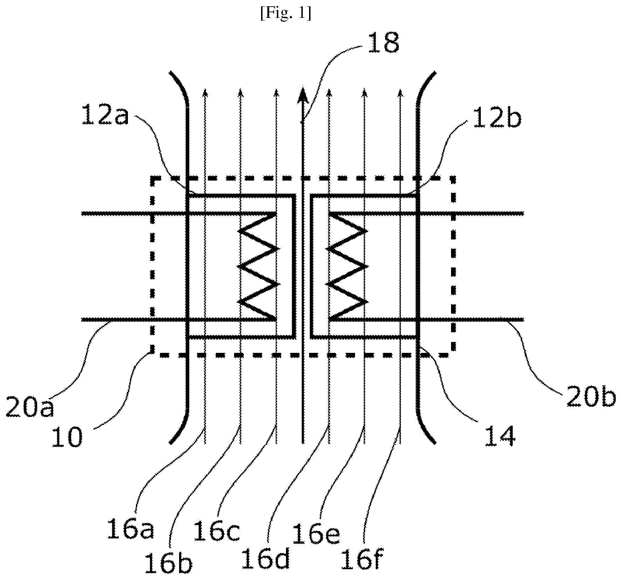

La figure 1 illustre un ensemble 10 d'échangeurs de chaleur selon un mode de réalisation de l'invention.

L'échangeur de chaleur comprend au moins deux échangeurs de chaleur adjacents, ici un premier échangeur 12a de chaleur et un deuxième échangeur 12b de chaleur, agencés dans un canal 14 de circulation d'air dynamique. Les échangeurs sont avantageusement fabriqués dans une même matrice.

Le canal 14 de circulation d'air dynamique s'étend selon une direction longitudinale, qui correspond à la direction de circulation de l'air dynamique traversant ledit canal 14, telle que schématisée par les flèches 16a à 16f et la flèche 18 représentant la circulation de l'air dynamique à travers le canal 14.

Les échangeurs 12a, 12b de chaleur sont ainsi adjacents selon une direction transversale (non représentée) perpendiculaire à la direction longitudinale.

L'air dynamique forme une passe froide de chacun des échangeurs de chaleur. Sous la forme schématique de la figure 1, une première partie de l'air dynamique représenté par les flèches 16a, 16b, 16c forme la passe froide du premier échangeur 12a de chaleur et une deuxième partie de l'air dynamique représenté par les flèches 16d, 16e, 16f forme la passe froide du deuxième échangeur 12b de chaleur.

Cet air dynamique formant la passe froide des échangeurs 12a, 12b de chaleur permet le refroidissement d'un fluide formant une passe chaude de chaque échangeur : le premier échangeur 12a de chaleur comprend un premier circuit 20a permettant la circulation d'un premier fluide formant une passe chaude dudit premier échangeur 12a de chaleur, et le deuxième échangeur 12b de chaleur comprend un deuxième circuit 20b permettant la circulation d'un deuxième fluide formant une passe chaude dudit deuxième échangeur 12b de chaleur.

L'écartement entre les échangeurs 12a, 12b de chaleur permet la formation d'un passage d'air ménagé entre les échangeurs de chaleur, formant, au passage de l'air dynamique, une lame 18 d'air thermiquement isolante entre lesdits échangeurs. La flèche représentant la lame 18 d'air dynamique est plus épaisse que les flèches 16a à 16f seulement pour des raisons de clarté, et l'épaisseur de ladite flèche ne présume pas de caractéristique particulière de l'air dynamique formant la lame 18 d'air par rapport à l'air dynamique formant une passe froide des échangeurs 12a, 12b de chaleur.

La présence de la lame 18 d'air permet d'éviter les ponts thermiques entre les échangeurs 12a et 12b de chaleur, c'est-à-dire la transmission de chaleur d'un échangeur de chaleur à l'autre. Lorsque les deux fluides formant la passe chaude de l'un et l'autre des échangeurs ont des températures très différentes, les ponts thermiques pourraient engendrer des disfonctionnements des échangeurs, en particulier le fluide le plus froid pourrait être réchauffé par l'air dynamique refroidissant le fluide le plus chaud. Ainsi, la lame 18 d'air thermiquement isolante permet de s'assurer du bon fonctionnement des deux échangeurs 12a, 12b de chaleur.

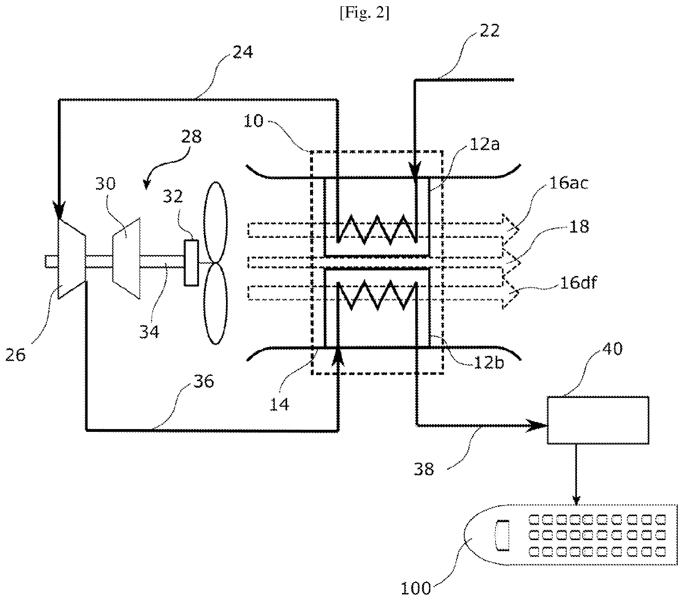

L'ensemble 10 d'échangeurs de chaleur est particulièrement adapté pour être utilisé dans un système de conditionnement d'air pour aéronef, dont un mode de réalisation est représenté en référence avec la figure 2.

L'ensemble 10 d'échangeurs de chaleur comprend de la même façon que précédemment deux échangeurs 12a et 12b de chaleur agencés dans le canal 14 de circulation d'air dynamique. L'air dynamique forme une première passe 16ac froide du premier échangeur 12a de chaleur (correspondant aux flèches 16a à 16c de la figure 1), une deuxième passe 16df froide du deuxième échangeur 12b de chaleur (correspondant aux flèches 16d à 16f de la figure 1). La lame 18 isolante traverse le canal 14 entre les deux échangeurs 12a, 12b de chaleur, selon la direction longitudinale.

Le premier échangeur 12a est un échangeur primaire de chaleur, souvent appelé PHX pour *Primary Heat eXchanger* en anglais. Le premier échangeur 12a reçoit de l'air 22 prélevé, par exemple sur les moteurs de l'aéronef ou prélevé à l'extérieur de l'aéronef puis compressé. Cet air 22 prélevé forme la passe chaude du premier échangeur 12a.

L'air 24 refroidi dans le premier échangeur est transmis au compresseur 26 d'une turbomachine 28, pour y être compressé. La turbomachine 28 comprend en outre une turbine 30, et un ventilateur 32, tous deux reliés entre eux et au compresseur par un arbre 34 de transmission. La turbomachine 28 peut aussi comprendre un moteur électrique, non représenté, pour former une turbomachine motorisée.

L'air 36 compressé par le compresseur 26 forme la passe chaude du deuxième échangeur 12b de chaleur. Le deuxième échangeur 12b de chaleur forme ainsi un échangeur principal de chaleur, souvent appelé MHX pour *Main Heat eXchanger* en anglais.

L'air 38 refroidi par le deuxième échangeur 12b de chaleur est transmis au groupe 40 de conditionnement d'air traitant cet air pour son conditionnement avant d'être transmis à une cabine 100 de l'aéronef. En particulier, ce traitement par le groupe 40 de conditionnement d'air peut comprendre un passage par la turbine 30 pour détente et refroidissement d'air, fournissant ainsi de l'énergie à la turbomachine 28 pour la rotation de celle-ci.

La rotation de l'arbre 34 de transmission de la turbomachine, du fait de la récupération d'énergie par la turbine 30, par un moteur électrique ou par tout autre moyen, entraîne le fonctionnement du ventilateur 32 qui permet la formation de l'air dynamique formant à la fois les passes 16ac, 16df froide des échangeurs 12a, 12b de chaleur, et à la fois la lame 18 d'air thermiquement isolante. Cet air dynamique généré par le système de conditionnement d'air est généralement appelé *RAM air* en anglais.

## Revendications

1. Système de conditionnement d'air pour un aéronef, comprenant un ensemble (10) d'échangeurs de chaleur comprenant un canal (14) de circulation d'air dynamique s'étendant selon une direction longitudinale et comprenant en outre :
- au moins deux échangeurs (12a, 12b) de chaleur disjoints et adjacents selon une direction transversale perpendiculaire à la direction longitudinale, agencés dans le canal (14) de circulation d'air dynamique, et configuré pour que l'air dynamique traversant ledit canal (14) forme une passe (16ac, 16df) froide de chaque échangeur (12a, 12b) de chaleur en traversant ledit échangeur (12a, 12b) de chaleur selon ladite direction longitudinale, chaque échangeur (12a, 12b) de chaleur étant en outre configuré pour être traversé par un fluide à refroidir formant une passe (20a, 20b) chaude ; et
- un passage d'air ménagé entre les échangeurs de chaleur formant une lame (18) d'air thermiquement isolante entre lesdits échangeurs (12a, 12b), et dans lequel circule l'air dynamique, ledit passage d'air s'étendant selon ladite direction longitudinale dudit canal (14) de circulation d'air dynamique,
dans lequel un premier échangeur (12a) de l'ensemble forme un échangeur primaire du système de conditionnement d'air, refroidissant de l'air prélevé et transmettant l'air ainsi refroidi vers une entrée d'un compresseur (26) du système de conditionnement d'air, et dans lequel un deuxième échangeur (12b) de l'ensemble forme un échangeur principal du système de conditionnement d'air, refroidissant l'air sortant dudit compresseur (26).

2. Système de conditionnement d'air selon la revendication 1, **caractérisé en ce qu'**au moins deux échangeurs (12a, 12b) de chaleur parmi les échangeurs de l'ensemble sont fabriqués dans une même matrice.

3. Système de conditionnement d'air selon l'une des revendications 1 à 2, **caractérisé en ce que** la distance entre les deux échangeurs (12a, 12b), selon la direction transversale, est comprise entre 1 mm et 10 mm, de préférence entre 3 mm et 6 mm.

4. Système de conditionnement d'air selon l'une des revendications 1 à 3, **caractérisé en ce qu'**il comprend une turbomachine (28) comprenant un arbre (34) de transmission, ledit arbre de transmission étant entrainé en rotation par la turbomachine (28) et entraînant un ventilateur (32) configuré pour fournir l'air dynamique traversant le canal (14) de circulation d'air dynamique.

5. Aéronef, **caractérisé en ce qu'**il comprend un système de conditionnement d'air selon l'une des revendications 1 à 4.

## Patentansprüche

1. Klimaanlage für ein Luftfahrzeug, welche eine Wärmetauscheranordnung (10) mit einem sich in Längsrichtung erstreckenden Kanal (14) für die dynamische Luftzirkulation umfasst und welche ferner umfasst:
- mindestens zwei voneinander getrennte und in einer zur Längsrichtung senkrechten Querrichtung benachbarte Wärmetauscher (12a, 12b), die in dem dynamischen Luftströmungskanal (14) angeordnet und so ausgestaltet sind, dass die den Kanal (14) durchströmende dynamische Luft an jedem Wärmetauscher (12a, 12b) einen kalten Durchgang (16ac, 16df) bildet, während sie den Wärmetauscher (12a, 12b) in der Längsrichtung durchströmt, wobei jeder Wärmetauscher (12a, 12b) ferner so ausgestaltet ist, dass er von einem zu kühlenden Fluid durchströmt wird, das einen heißen Durchgang (20a, 20b) bildet; und
- einen Luftdurchgang, der zwischen den Wärmetauschern vorgesehen ist und einen thermisch isolierenden Luftspalt (18) zwischen den Wärmetauschern (12a, 12b) bildet, und in dem die dynamische Luft zirkuliert, worin sich der Luftdurchgang entlang der Längsrichtung des Kanals (14) für die Zirkulation der dynamischen Luft erstreckt, worin ein erster Wärmetauscher (12a) der Anordnung einen Primärwärmetauscher der Klimaanlage bildet, der die entnommene Luft kühlt und die so gekühlte Luft zu einem Einlass eines Kompressors (26) der Klimaanlage leitet, und worin ein zweiter Wärmetauscher (12b) der Anordnung einen Hauptwärmetauscher der Klimaanlage bildet, der die aus dem Kompressor (26) austretende Luft kühlt.

2. Klimaanlage nach Anspruch 1, **dadurch gekennzeichnet, dass** mindestens zwei Wärmetauscher (12a, 12b) von den Wärmetauschern der Anlage in derselben Form gefertigt sind.

3. Klimaanlage nach einem der Ansprüche 1 bis 2, **dadurch gekennzeichnet, dass** der Abstand zwischen den beiden Wärmetauschern (12a, 12b) in Querrichtung zwischen 1 mm und 10 mm, vorzugsweise zwischen 3 mm und 6 mm, beträgt.

4. Klimaanlage nach einem der Ansprüche 1 bis 3, **dadurch gekennzeichnet, dass** diese eine Turbomaschine (28) mit einer Antriebswelle (34) umfasst, wobei die Antriebswelle von der Turbomaschine (28) in Drehung versetzt wird und einen Ventilator (32) antreibt, der ausgestaltet ist, die den Luftkanal (14) durchströmende Luft zu liefern.

5. Luftfahrzeug, **dadurch gekennzeichnet, dass** dieses eine Klimaanlage nach einem der Ansprüche 1 bis 4 umfasst.

## Claims

1. Air conditioning system for an aircraft comprising a heat exchanger assembly (10) comprising a ram air flow channel (14) extending in a longitudinal direction, comprising moreover:
- at least two separate heat exchangers (12a, 12b) that are adjacent in a transverse direction perpendicular to the longitudinal direction, are arranged in the ram air flow channel (14), and are configured such that the ram air passing through said channel (14) forms a cold pass (16ac, 16df) of each heat exchanger (12a, 12b) by passing through said heat exchanger (12a, 12b) in said longitudinal direction, each heat exchanger (12a, 12b) also being configured for the passage therethrough of a fluid that is intended to be cooled and that forms a hot pass (20a, 20b); and
- an air passage which is provided between the heat exchangers and forms a thermally insulating air gap (18) between said exchangers (12a, 12b), and through which the ram air flows, said air passage extending in said longitudinal direction of said ram air flow channel (14),
in that a first exchanger (12a) of the assembly forms a primary exchanger of the air conditioning system, cooling the intake air and transmitting the air thus cooled to an inlet of a compressor (26) of the air conditioning system, and in that a second exchanger (12b) of the assembly forms a main exchanger of the air conditioning system, cooling the air leaving said compressor (26).

2. Air conditioning system for an aircraft according to claim 1, **characterized in that** at least two heat exchangers (12a, 12b) of the exchangers of the assembly are produced in the same mold.

3. Assembly according to any of claims 1 to 2, **characterized in that** the distance between the two exchangers (12a, 12b), in the transverse direction, is between 1 mm and 10 mm, preferably between 3 mm and 6 mm.

4. Air conditioning system for an aircraft according to any of claims 1 to 3, **characterized in that** said system comprises a turbine engine (28) comprising a transmission shaft (34), said transmission shaft being rotated by the turbine engine (28) and driving a fan (32) configured to supply the ram air passing through the ram air flow channel (14).

5. Aircraft, **characterized in that** said aircraft comprises an air conditioning system according to any of claims 1 to 4.
